# EUROPÄISCHE PATENTSCHRIFT

(11) **EP 1 639 465 B1**
(45) Veröffentlichungstag und Bekanntmachung des Hinweises auf die Patenterteilung: **06.04.2011**
(21) Anmeldenummer: 04766028.7
(22) Anmeldetag: 01.06.2004
(51) Int. Cl.: G06F 11/00

(54) **VERFAHREN ZUR ÜBERWACHUNG DES PROGRAMMLAUFS IN EINEM MIKRO-COMPUTER**
METHOD FOR MONITORING THE EXECUTION OF A PROGRAM IN A MICRO-COMPUTER
PROCEDE PERMETTANT DE SURVEILLER L'EXECUTION D'UN PROGRAMME DANS UN MICRO-ORDINATEUR

(30) Priorität: 30.06.2003 DE 10329501
(43) Veröffentlichungstag der Anmeldung: 29.03.2006
(73) Patentinhaber: Continental Automotive GmbH, 30165 Hannover (DE)
(72) Erfinder: SCHMID, Dietmar, 65606 Villmar (DE); KOLB, Rüdiger, 55278 Dalheim (DE); PLATZER, Uwe, 65843 Sulzbach (DE)
(86) Internationale Anmeldenummer: PCT/EP2004/050979
(87) Internationale Veröffentlichungsnummer: WO 2005/001690

(56) Entgegenhaltungen:
- EP-A- 0 461 792
- US-A- 5 029 071
- US-A- 5 551 047

## Beschreibung

Die Erfindung betrifft ein Verfahren zur Überwachung des Programmlaufs in einem Mikrocomputer eines elektronischen Gerätes, insbesondere einer Sensorschaltung für Kraftfahrzeuge, wobei das Programm Eingangsdaten verarbeitet und Ausgangsdaten erzeugt.

Bei elektronischen Geräten, die mit einem Mikrocomputer ausgerüstet sind, kann es durch Defekte im Mikrocomputer, insbesondere bei fehlerhaftem Programmlauf, zu Ausfällen und Fehlfunktionen kommen. Bei Sensorschaltungen für Kraftfahrzeuge und anderen sicherheitsrelevanten Geräten können derartige Fehler zu Gefährdungen führen, die mit sehr großer Sicherheit vermieden werden müssen.

Druckschrift US 5,029,071 beschreibt ein Datenverarbeitungssystem, umfassend eine erste und eine zweite Datenverarbeitungseinheit, in denen jeweils Daten erstellt werden, Überwachungseinheiten, die Inkonsistenzen von Daten bezüglich eines ersten und eines zweiten Daten-Busses erkennen, wobei diese Datenbusse der ersten bzw. zweiten Datenverarbeitungseinheit zugeordnet sind, sowie eine Diagnoseeinheit, welche der ersten und zweiten Überwachungseinheit gemeinsam zugeordnet ist und welche einen Testprozess abarbeitet, der die möglichen Inkonsistenzen bezogen auf die erste und zweite Überwachungseinheit identifiziert.

Der vorliegenden Erfindung liegt die Aufgabe zu Grunde, den Programmlauf in einem Mikrocomputer möglichst vollständig und sicher zu überwachen und somit durch ein geeignetes Alarmsignal Benutzer zu informieren oder in verbundenen Systemen Gegenmaßnahmen einzuleiten.

Diese Aufgabe wird erfindungsgemäß gelöst durch das Verfahren gemäß Anspruch 1.

Das erfindungsgemäße Verfahren berücksichtigt, dass bei einem an sich einwandfreien Programm ein Hardware-bedingter Fehler während des Ablaufs des Programms nicht auch bei einem identischen Programm auftritt.

Mit einer Weiterbildung kann die Kopie des Programms dadurch überprüft werden, dass ein weiterer Lauf der Kopie vorgesehen ist, bei welchem vorgegebene Testdaten verarbeitet werden, dass die Ausgangsdaten des weiteren Laufs der Kopie mit in einem Speicher abgelegten Vergleichsdaten verglichen werden und dass bei Nichtübereinstimmung eine Fehlermeldung erzeugt wird.

Um insgesamt den Lauf des Programms einschließlich des zur Überwachung dienenden Programms kontrollieren zu können, ist bei einer Weiterbildung des erfindungsgemäßen Verfahrens vorgesehen, dass nach dem Lauf des Programms und nach dem Lauf von Programmteilen, welche zur Durchführung des erfindungsgemäßen Verfahrens dienen, jeweils ein Flag gesetzt oder geändert wird und dass eine Fehlermeldung erzeugt wird, wenn nicht alle Flags gesetzt oder geändert wurden.

Die Erfindung lässt zahlreiche Ausführungsformen zu. Zwei davon sind schematisch in der Zeichnung anhand mehrerer Figuren dargestellt und nachfolgend beschrieben. Es zeigen:
- Fig. 1:: ein Blockschaltbild eines Anwendungsbeispiels für das erfindungsgemäße Verfahren,
- Fig. 2:: eine Darstellung verschiedener Funktionen zur Ü- berwachung des Programmlaufs in einem Mikrocompu- ter, und
- Fig. 3:: ein Flussdiagramm eines Programms zur Realisie- rung der in Fig. 2 erläuterten Funktionen.

Im Zusammenhang mit den Ausführungsbeispielen wird das Programm auch Software-Routine genannt.

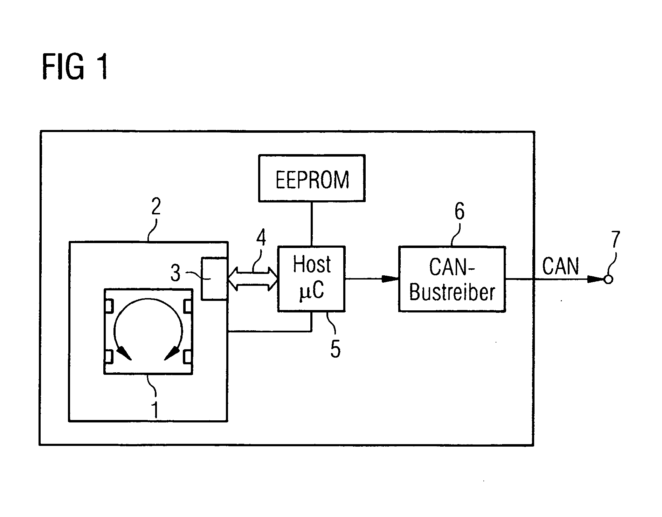

Das Anwendungsbeispiel gemäß Fig. 1 stellt einen Drehratensensor für ein Kraftfahrzeug dar, mit einem Vibrationskreisel 1, der Teil eines Sensormoduls 2 ist. Dies weist eine Reihe von Schaltungen zum Betrieb des Vibrationskreisels und zu der Auswertung der Signale des Vibrationskreisels auf, unter anderem auch einen Mikrocomputer 3. Dieser ist über einen SPI-Bus 4 mit einem weiteren Mikrocomputer 5 verbunden, der im folgenden auch Host genannt wird. Von diesem gelangt die Drehrateninformation über einen CAN-Bustreiber 6 an einen CAN-Bus 7 zur Weiterleitung an andere Systeme im Kraftfahrzeug.

Da es zum Verständnis der Erfindung nicht erforderlich ist, sind der Vibrationskreisel 1 und das Sensormodul 2 nicht näher erläutert. Wegen der Sicherheitsrelevanz des Drehratensensors ist eine Überwachung der ordnungsgemäßen Funktion der Mikrocomputer 3, 5, insbesondere des Programmlaufs, vorgesehen.

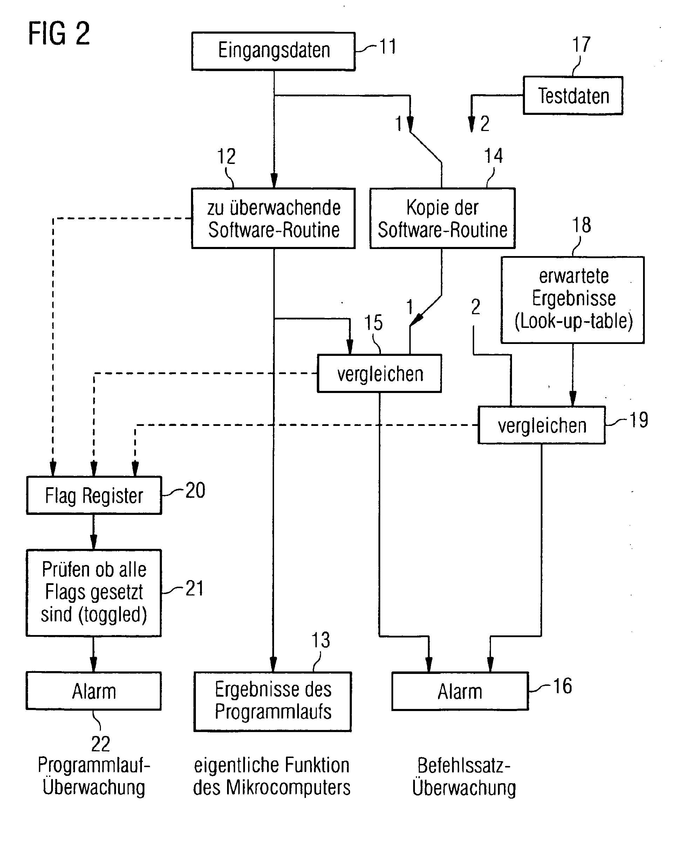

Bei dem in Fig. 2 dargestellten Beispiel sind diejenigen Funktionen, die der eigentlichen Funktion des Mikrocomputers (Primary function) dienen, als Rechtecke dargestellt. Bei 11 werden Eingangsdaten gelesen - beispielsweise aus den in Fig. 1 angedeuteten Schaltungen des Sensormoduls 2 - und in der zu überwachenden Software-Routine bei 12 verarbeitet. Die Ergebnisse dieses Programmlaufs werden bei 13 ausgegeben - im Falle von Fig. 1 letztendlich auf den CAN-Bus 7. Die betroffenen Mikrocomputer arbeiten in der Regel mit einer Reihe von Software-Routinen, die sich zu einem Programmsystem ergänzen. In Fig. 2 ist die Überwachung einer Routine dargestellt, die bei Vorhandensein von mehreren Routinen besonders wichtig ist.

Mit dem erfindungsgemäßen Verfahren können jedoch auch mehrere Routinen überwacht werden.

In dem Mikrocomputer 3, 5 (Fig. 1) ist außer der zu überwachenden Software-Routine in einem anderen Adressenbereich eine Kopie der Software-Routine abgelegt - im folgenden Kopie genannt. Zur Überprüfung des ordnungsgemäßen Programmlaufs der Original-Routine wird in einem ersten Schritt ein Lauf der Kopie mit den gleichen Eingangsdaten bei 14 durchgeführt. Die Ausgangsdaten dieses Programmlaufs werden mit den Ausgangsdaten der Original-Routine bei 15 verglichen. Im Falle von Unterschieden wird bei 16 ein Alarm ausgelöst.

In einem weiteren Schritt erfolgt ein Programmlauf der Kopie mit Testdaten 17. Die Ausgangsdaten dieses Programmlaufs werden mit gespeicherten erwarteten Ergebnissen, die in einer Look-up-table 18 abgelegt sind, bei 19 verglichen. Treten hier Unterschiede auf, wird ebenfalls bei 16 ein Alarm ausgelöst.

Zur Überwachung dessen, ob die in Fig. 2 dargestellte Überwachung auch tatsächlich stattfindet, ist vorgesehen, dass nach der Ausführung des Programmlaufs der Original-Routine bei 12 und nach Ausführung der Vergleiche bei 15, 19 Flags in einem Register 20 gesetzt werden. Bei 21 wird dann geprüft, ob alle Flags gesetzt sind. Ist dieses nicht der Fall, wird bei 22 ein Alarm ausgelöst.

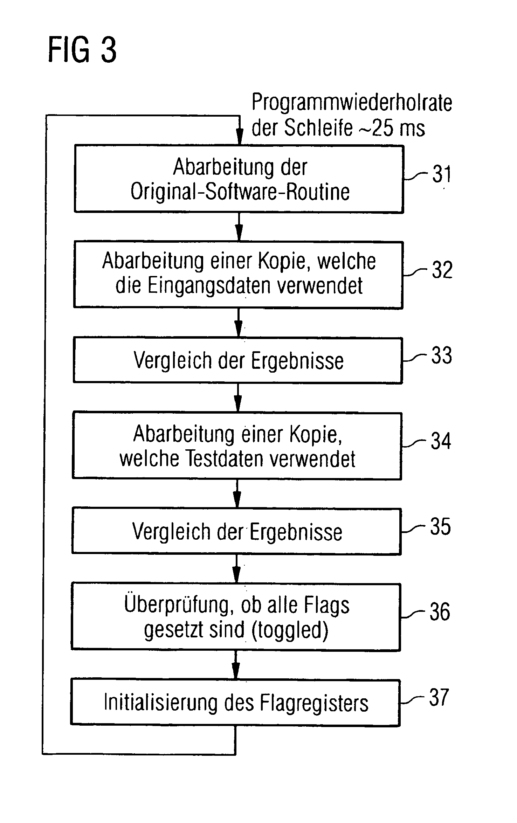

Fig. 3 zeigt das bereits anhand von Fig. 2 erläuterte Überwachungsprogramm als Flussdiagramm, das beispielsweise alle 25 ms wiederholt wird. Dabei wird in einem ersten Programmschritt 31 zunächst die Original-Routine abgearbeitet, bei 32 folgt die Kopie, bei 33 werden die Ergebnisse verglichen. Im Programmschritt 34 wird dann die Kopie mit den Testdaten abgearbeitet. Danach werden bei 35 die Ergebnisse des Programmlaufs 34 miteinander verglichen. Bei 36 wird geprüft, ob alle Flags gesetzt sind, worauf bei 37 das Flagregister initialisiert wird, d.h. rückgesetzt, wenn ein Setzen der Flags, wie im Zusammenhang mit Fig. 2 erläutert, durchgeführt wird. Alternativ kann anstelle des Setzens des Sets ein Toggeln durchgeführt werden.

## Patentansprüche

1. Verfahren zur Überwachung des Programmlaufs in einem Mikrocomputer eines elektronischen Gerätes, insbesondere einer Sensorschaltung für Kraftfahrzeuge, wobei das Programm Eingangsdaten verarbeitet und Ausgangsdaten erzeugt, wobei zusätzlich zu dem Lauf des Programms eine Kopie des Programms, die in einem anderen Adressenbereich als das Programm im Mikrocomputer gespeichert ist, mit den für das Programm vorgesehenen Eingangsdaten abläuft und dass die Ausgangsdaten der Kopie mit denen des Programms verglichen werden und bei Nichtübereinstimmung eine Fehlermeldung erzeugt wird, **dadurch gekennzeichnet, dass**
ein weiterer Lauf der Kopie vorgesehen ist, bei welchem vorgegebene Testdaten verarbeitet werden, dass die Ausgangsdaten des weiteren Laufs der Kopie mit in einem Speicher abgelegten Vergleichsdaten verglichen werden und dass bei Nichtübereinstimmung eine Fehlermeldung erzeugt wird.

2. Verfahren nach Anspruch 1, **dadurch gekennzeichnet, dass** nach dem Lauf des Programms und nach dem Lauf von Programmteilen, welche zur Durchführung des erfindungsgemäßen Verfahrens dienen, jeweils ein Flag gesetzt oder geändert wird und dass eine Fehlermeldung erzeugt wird, wenn nicht alle Flags gesetzt oder geändert wurden.

## Claims

1. Method for monitoring the program execution in a microcomputer in an electronic appliance, particularly a sensor circuit for motor vehicles, where the program processes input data and generates output data, where, in addition to the execution of the program, a copy of the program, which is stored in a different address area than the program in the microcomputer, is executed with the input data intended for the program, and where the output data from the copy are compared with those from the program and an error message is generated if they do not match, **characterized in that** further execution of the copy is provided which involves processing prescribed test data, **in that** the output data from the further execution of the copy are compared with comparative data stored in a memory, and **in that** an error message is generated if they do not match.

2. Method according to Claim 1, **characterized in that** following the execution of the program and following the execution of program portions which are used to perform the inventive method a respective flag is set or changed, and **in that** an error message is generated if not all the flags have been set or changed.

## Revendications

1. Procédé permettant de surveiller l'exécution d'un programme dans un micro-ordinateur d'un appareil électronique, notamment d'un circuit de détecteur pour véhicules automobiles, où le programme traite des données d'entrée et génère des données de sortie, où, en plus de l'exécution du programme, un double du programme, lequel est mémorisé dans le micro-ordinateur dans une autre zone d'adresses que le programme lui-même, tourne avec les données d'entrée prévues pour le programme et où les données de sortie du double sont comparées à celles du programme et, en cas de non-concordance, un message d'erreur est généré, **caractérisé par le fait qu'**il est prévu une nouvelle exécution du double au cours de laquelle sont traitées des données de test déterminées au préalable, que les données de sortie de la nouvelle exécution du double sont comparées à des données de comparaison stockées dans une mémoire et que, en cas de non-concordance, un message d'erreur est généré.

2. Procédé selon la revendication 1, **caractérisé par le fait que**, après chaque exécution du programme et après chaque exécution de parties du programme, qui servent à l'exécution du procédé conforme à l'invention, un fanion est mis en place ou modifié et qu'un message d'erreur est généré lorsque tous les fanions n'ont pas été mis en place ou modifiés.
